(19) **Europäisches Patentamt** / **European Patent Office** / **Office européen des brevets**

(11) **EP 2 268 074 B1**

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(51) Int Cl.:
***H04W 24/04*** *(2009.01)*

(21) Anmeldenummer: **09163797.5**

(22) Anmeldetag: **25.06.2009**

(54) **Verfahren zur Ermittlung von Konfigurationsparametern für ein Kompensationsnetzwerk für die Kompensation einer ausgefallenen Basisstation eines Mobilfunknetzes**

Method for calculating configuration parameters for a compensation network for the compensation for a base station in outage of a mobile radio network

Procédé de définition de paramètres de configuration pour un réseau de compensation pour la compensation d'une station de base en panne d'un réseau radio mobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**29.12.2010 Patentblatt 2010/52**

(73) Patentinhaber: **Deutsche Telekom AG**
**53113 Bonn (DE)**

(72) Erfinder:
• **Belschner, Jakob**
**65934 Frankfurt (DE)**
• **Arnold, Paul**
**61231 Bad Nauheim (DE)**

(74) Vertreter: **Vossius & Partner**
**Siebertstrasse 4**
**81675 München (DE)**

(56) Entgegenhaltungen:
**WO-A2-2008/030171     US-A1- 2006 084 441**

**Beschreibung**

Gebiet der Erfindung

Die vorliegende Erfindung betrifft ein Verfahren zur Ermittlung von Konfigurationsparametern für ein Kompensationsnetzwerk für die Kompensation einer ausgefallenen Basisstation (BS) eines Mobilfunknetzes, wobei das Kompensationsnetzwerk mindestens eine kompensierende Basisstation aufweist.

Hintergrund der Erfindung

In Mobilfunkzugangsnetzen besteht im Allgemeinen das Problem, dass verschiedene Einflüsse zu einem Ausfall einer Mobilfunk-Basisstation (BS) führen können. Solche Einflüsse können aus verschiedenen Gründen entstehen, gängige Ursachen sind Hard-und Softwarefehler, z.B. der Defekt eines Antennenverstärkers, und äußere Umwelteinflüsse, z.B. Blitzeinschlag.

Wenn eine Mobilstation (MS), welche durch eine ausgefallene Basisstation mit dem Mobilfunknetz verbunden war, nach dem Ausfall keine anderen Basisstationen zur erneuten Anbindung an das Netz nutzen kann, bedeutet dies, dass ein nicht mehr abgedeckter Versorgungsbereich entstanden ist. Das heißt, dass umliegende Basisstationen in diesem Bereich keine oder nur eine zu geringe Empfangsleistung bereitstellen.

Um einen Basisstation-Ausfall zu beheben, wird versucht, die notwendigen Reparaturmaßnahmen, beispielsweise den Austausch eines Antennenverstärkers, so schnell wie möglich durchzuführen. Es kann allerdings der Fall sein, dass diese Reparaturmaßnahmen längere Zeit, etwa Tage oder auch Wochen in Anspruch nehmen. In diesem Fall wird versucht, den durch den Basisstation-Ausfall nicht mehr vom Mobilfunknetz abgedeckten Bereich durch Kompensationsmaßnahmen kurzfristig zu verkleinern oder die Versorgungslücke gar komplett zu schließen. Maßnahmen, Basisstation-Ausfällen entgegen zu wirken, werden nach dem aktuellen Stand der Technik typischerweise manuell ergriffen (siehe, zum Beispiel, das EU Förderprojekt Self-Optimisation & Self-Configuration in wireless networks (SOCRATES)). Eine mögliche Maßnahme zur Kompensation ist, die Sendeleistung umliegender Basisstationen manuell zu erhöhen und durch anschließende Testfahrten zu überprüfen, ob die entstandene Versorgungslücke geschlossen und durch umliegende Basisstationen wieder abgedeckt wurde. Diese manuellen Maßnahmen bringen allerdings einen hohen Personal- und damit Kostenaufwand mit sich. Des Weiteren werden manuelle Kompensationsmaßnahmen nicht optimal an die jeweilige Situation angepasst sondern nur nach groben Abschätzungen durchgeführt.

Mechanismen zur automatischen Kompensation von Basisstation-Ausfällen, sogenanntes self-healing oder cell outage compensation, sind im Moment Gegenstand der Forschung (siehe, zum Beispiel, das EU Förderprojekt Self-Optimisation & Self-Configuration in wireless networks (SOCRATES) und IEEE 802.16 Broadband Wireless Access Working Group: Self-configuration and self-optimization of 4G Radio Access Networks, 2007-08-29).

Ein mögliche Vorgehensweise, um Self-healing zu realisieren, ist in der WO 2008/030171 beschrieben. Hier wird ein zentraler Netzwerkrekonfigurator zur Behebung des Problems verwendet. Dieser Netzwerkrekonfigurator enthält bereits vor dem Ausfall einer Basisstation berechnete Listen von Alternativkonfigurationen für alle Basisstationen des Mobilfunknetzes, welche im Falle eines Ausfalls an den umliegenden Basisstationen rekonfiguriert werden (vgl. Absatz [0048]).

In der anhängigen EP Patentanmeldung 09 15 4403.1 (Dokument nach Art. 54 (3) EPÜ) ist ein Verfahren zur Identifizierung der vom Ausfall einer Basisstation eines Mobilfunknetzes betroffenen Mobilstationen und ein Verfahren zur Kompensation der durch den Ausfall der Basisstation entstandenen Versorgungslücke, beschrieben. Dabei wird vor dem Ausfall, für jede Basisstation des Mobilfunknetzes, eine Liste mit der jeweiligen Basisstation verbundenen Mobilstationen und mit der jeweiligen Basisstation benachbarten Basisstationen bestimmt und gespeichert. Nach dem Ausfall der Basisstation erfolgt zunächst eine Auswertung der gespeicherten Listen der Basisstationen des Mobilfunknetzes zur Bestimmung der mit der ausgefallenen Basisstation benachbarten Basisstationen. Anschließend wird eine Auswertung der gespeicherten Listen der Basisstationen des Mobilfunknetzes zur Identifizierung der Mobilstationen vorgenommen, die vor dem Ausfall der Basisstation

mit dieser verbunden waren und nach dem Ausfall der Basisstation mit keiner der Basisstationen verbunden sind, die zu der ausgefallenen Basisstation benachbart sind.

Ferner ist darin ein Kompensationsverfahren zur Kompensation des Ausfalls der Basisstation des Mobilfunknetzes offenbart. Dieses weist die Schritte auf A. Auswahl mindestens einer Kompensationsbasisstation, die eine der Basisstationen des Kompensationsnetzwerkes ist; B. Ermittlung des aktuellen Zustands des Kompensationsnetzwerkes; C. Änderung der Eigenschaften der mindestens einen Kompensationsbasisstation; D. Ermittlung des aktuellen Zustands des Kompensationsnetzwerkes; E. Vergleich des Zustands des Kompensationsnetzwerkes mit und ohne der Änderung der Eigenschaften der mindestens einen Kompensationsbasisstation und Beibehalten der Änderung wenn ein Vergleichskriterium erfüllt ist; F. Wiederholung der Schritte A-E oder C-E des Kompensationsverfahrens, bis das Kompensationsnetzwerk ein Abbruchkriterium erfüllt.

Zusammenfassung der Erfindung

Der Erfindung liegt die Aufgabe zugrunde, ein Verfahren zur Ermittlung bestmöglicher Kompensationsparameter zur Kompensation der durch den Ausfall der Basisstation entstandenen Versorgungslücke bereitzustellen.

Diese Aufgabe wird durch die Verfahren der vorliegenden Patentansprüche gelöst.

Somit ist es zum Beispiel möglich, nach Ausfall einer Basisstation eines Mobilfunknetzes, einen automatisch optimierenden Selbstheilungsprozess einzuführen, der auf einen erkannten BS-Ausfall reagiert und sowohl Kosten für manuelle Kompensation einspart als auch ein besseres Kompensationsergebnis erreicht.

Die Erfindung stellt Verfahren zur Ermittlung von Konfigurationsparametern für ein Kompensationsnetzwerk für die Kompensation einer ausgefallenen Basisstation (BS) eines Mobilfunknetzes bereit, wobei das Kompensationsnetzwerk mindestens eine kompensierende Basisstation aufweist Im Gegensatz zu dem in der WO 2008/030171 beschriebenen Verfahren arbeitet das erfindungsgemäße Verfahren dynamisch, benötigt also keine vorberechneten Alternativkonfigurationen. Da es sich um ein heuristisches Verfahren handelt, ist es in der Lage, selbstständig eine Lösung für ein auftretendes Problem zu finden.. Das erfindungsgemäße Verfahren weist die Schritte auf, nach dem Ausfall der Basisstation (BS):

a    Ermitteln von aktuellen Informationen über mindestens einen Konfigurationsparameter von jeder der mindestens einen kompensierenden Basisstation;

b    Ermitteln möglicher Konfigurationswerte oder Konfigurationsbereiche des mindestens einen Konfigurationsparameters für jede der mindestens einen kompensierenden Basisstation aus den ermittelten aktuellen Konfigurationsparameterinformationen;

c    Bestimmen, aus den möglichen Konfigurationswerten oder Konfigurationsbereichen, einer Neukonfiguration für die mindestens eine kompensierende Basisstation des Kompensationsnetzwerkes;

d    Herstellen der Neukonfiguration des Kompensationsnetzwerkes durch entsprechendes Umkonfigurieren jeder der mindestens einen kompensierenden Basisstation;

e    Ermitteln der nach erfolgtem Schritt d) mit den Basisstationen des Kompensationsnetzwerks verbundenen Mobilstationen und Vergleichen der ermittelten verbundenen Mobilstationen mit den ursprünglich nach dem Ausfall der Basisstation mit den Basisstationen des Kompensationsnetzwerkes verbundenen Mobilstationen;

f    Bewerten der aktuellen Konfiguration des Kompensationsnetzwerkes;

g    Wiederholen der Schritte c) bis f) entsprechend einer vorgegebenen Anzahl, um einen konfigurationssatz zu erhalte; und

h    Ermitteln einer besten Parameterkonfiguration aus den in Schritt f) erhaltenen Bewertungen für jede Konfiguration.

Bevorzugt werden die Schritte a) bis h) von einer Koordinationsbasisstation, die eine der Basisstationen des Kompensationsnetzwerkes ist, koordiniert.

Als Konfigurationsparameter werden beispielsweise Sendeleistung und/oder Neigungswinkel des Antennenelements verwendet, und als aktuellen Informationen, die den aktuellen Zustand der Konfiguration darstellen werden vorzugsweise der aktuelle Wert, der Maximalwert und die Granularität des jeweiligen Konfigurationsparameters verwendet.

In Schritt b) entsprechen die möglichen Konfigurationsbereiche vorzugsweise der Differenz aus jeweiligem Maximalwert und aktuellem Wert, und die Konfigurationswerte entsprechen den sich aus der Differenz und Granularität ergebenden Stufen.

Es ist bevorzugt, dass in Schritt c) die Neukonfiguration zufällig bestimmt wird. Wie im Folgenden noch beschrieben wird, gilt die zufällige Neukonfiguration jedoch vorzugsweise nur für einen ersten Konfigurationssatz.

Gemäß einer ersten bevorzugten Ausführungsform übermitteln in Schritt e) die kompensierenden Basisstationen das Ermittlungsergebnis an die koordinierende Basisstation und das Vergleichen der ermittelten verbundenen Mobilstationen mit den ursprünglich nach dem Ausfall der Basisstation verbundenen Mobilstationen wird in der koordinierenden Basisstation durchgeführt. Alternativ dazu führen die kompensierenden Basisstationen den Vergleich aus und das jeweilige Vergleichsergebnis wird an die koordinierende Basisstation übermittelt.

Es ist ferner bevorzugt, dass das Konfigurationsnetzwerk zwischen den Schritten e) und f) oder zwischen den Schritten f) und g) in seinen Ausgangszustand zurück versetzt wird. Alternativ dazu wird das Konfigurationsnetzwerk zwischen den Schritten e) und f) oder zwischen den Schritten f) und g) nicht in seinen Ausgangszustand zurück versetzt.

Gemäß einer bevorzugten Ausführungsform weist Schritt h) folgende Teilschritte auf: Ermitteln eines weiteren Satzes an neuen Konfigurationen in Abhängigkeit von den besten Bewertungen der zufällig erzeugten Konfigurationen des vorhergehenden Konfigurationssatzes, wobei der neue Konfigurationssatz die gleiche Anzahl an Konfigurationen wie der vorhergehende Konfigurationssatz aufweist; entsprechendes Umkonfigurieren jeder der mindestens einen kompensierenden Basisstation;

Ermitteln der mit den Basisstationen des Kompensationsnetzwerk verbundenen Mobilstationen und Vergleichen der ermittelten verbundenen Mobilstationen mit den ursprünglich nach dem Ausfall der Basisstation mit den Basisstationen des kompensationsnetzwerks verbunden Mobilstationen; und Bewerten der jeweiligen Konfiguration der Basisstationen des Kompensationsnetzwerkes.

Weiter bevorzugt weist Schritt h) folgende Teilschritte auf:

H1 Gruppieren aller Bewertungsergebnisse und zugehöriger Kompensationsnetzwerk-Konfiguration in eine erste Gruppe mit einer vorgegebenen Anzahl der besten Bewertungsergebnisse und einer zweiten Gruppe mit den übrigen Bewertungsergebnissen;

H2 Zufälliges Auswählen von jeweils k Konfigurationen aus der ersten Gruppe und jeweiliges Unterteilen ausgewählten Konfigurationen an zufälliger Stelle, um dadurch 2k Teilkonfigurationen zu erhalten (wobei k < N/2 ist, wobei N die Gesamtzahl der in der ersten Gruppe enthaltenen Konfigurationen ist, und k vorzugsweise gleich 2 ist);

H3 Zusammensetzen der erhaltenen 2k Teilkonfigurationen zu k neuen Konfigurationen;

H4 Verändern der neu erzeugten Konfigurationen;

H5 Wiederholen der Schritte H2 bis H4 bis ein neuer Konfigurationssatz mit ebenso vielen Konfigurationen wie der ursprüngliche Konfigurationssatz erzeugt ist;

H6 Wiederholen der Schritte c) bis h) mit den Konfigurationen des neuen Konfigurationssatzes bis ein Abbruchkriterium erfüllt ist.

Das Abbruchkriterium ist beispielsweise eine vorgegebene Anzahl zu durchlaufender Konfigurationssätze. Die sich bei Abbruch ergebende beste Konfiguration wird dann als bestmögliche Konfiguration beibehalten, bis die ausgefallene Basisstation wieder in Betrieb genommen wird.

Kurzbeschreibung der Zeichnungen

Vorteilhafte Ausführungsformen der Erfindung werden beispielhaft in den Figuren dargestellt. Es zeigen:

Fig. 1 den Aufbau eines Mobilfunknetzes mit einer Mobilstation;
Fig. 2 den Aufbau eines Mobilfunknetzes mit mehreren Mobilstationen; und
Fig. 3 die Generierung neuer Kompensationskonfigurationen

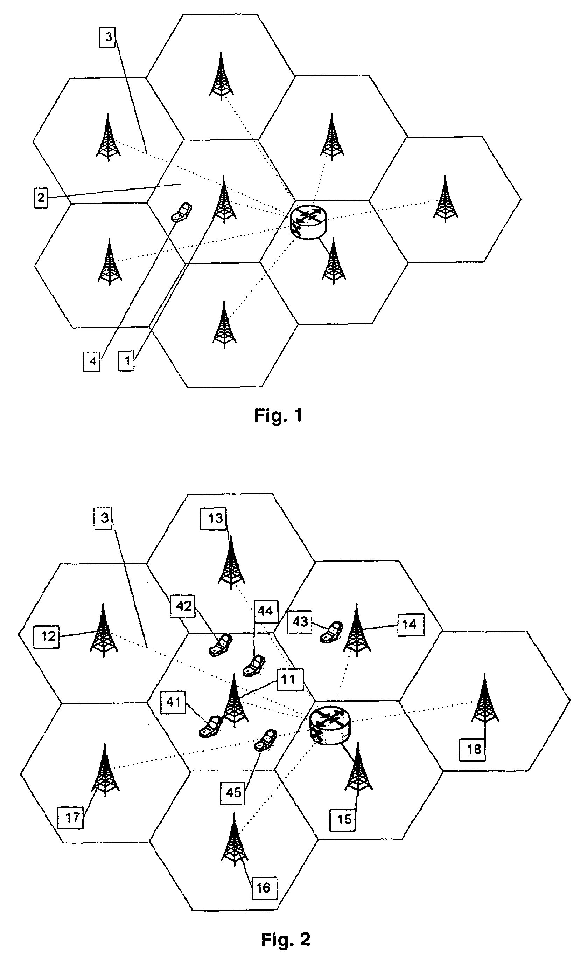

Fig. 1 zeigt den prinzipiellen Aufbau eines zellularen Mobilfunknetz mit mehreren Basisstationen (BS) 1, die von Basisstationen abgedeckten Zellen 2, breitbandige

Kommunikationsverbindungen 3, die das sogenannte Backbone zwischen den BS bilden (beispielsweise Kabel- oder Richtfunkverbindungen) und eine Mobilstation (MS) 4 die sich in der Zelle 2 befindet.

Fällt nun eine Basisstation des Netzes ganz oder teilweise aus, sind beispielsweise für eine erfindungsgemäße automatische Kompensation Informationen darüber erforderlich, welche Mobilstation von diesem Ausfall betroffen sind und welche Basisstation zur Kompensation eingesetzt werden können. Sobald diese Informationen vorliegen, kann die automatische Kompensation begonnen werden.

Während des Betriebs eines Mobilfunknetzes liegen die folgenden Informationen vor:

Identifikationsnummern (IDs) der Mobilstation, über die eine aktive Datenverbindung besteht (im Folgenden als aktive Mobilstation bezeichnet)

Für jede aktive Mobilstation die ID der Basisstation, über die die Datenverbindung besteht (der Begriff Datenverbindung schließt in diesem Kontext auch ein Telefongespräch mit ein).

Für jede Basisstation eine Liste mit IDs der benachbarten Basisstationen, die sogenannte Nachbarschaftsliste bzw. Neighbour Cell List (NCL)

An welcher Stelle diese Informationen vorliegen, ist von der eingesetzten Netzwerktechnologie abhängig. Beispielsweise liegen in Netzen nach dem Mobilfunkstandard Long Term Evolution (LTE) die Informationen in jeder Basisstation separat vor. D.h. in jeder Basisstation sind die IDs der aktiven Mobilstation dieser Basisstation vorhanden, nicht aber die IDs der aktiven Mobilstation anderer Basisstationen. Gleichzeitig ist in jeder Basisstation eine NCL mit den IDs der benachbarten Basisstationen hinterlegt. Anderseits können die gleichen Informationen in gebündelter Form in einer übergeordneten Netzkomponente im Mobilfunknetz vorliegen, wie zum Beispiel in dem Radio Network Controller (RNC) eines UMTS oder dem Base Station Controller (BSC) eines GSM Netzes. In einem RNC/BSC, dem mehrere Basisstationen zugeordnet sind, liegen folgende Informationen vor: die IDs aller aktiven Mobilstation eines RNC/BSC und die NCL aller Basisstationen eines RNC/BSC.

Zusammenfassend können also die erwähnten Informationen in Mobilfunknetzen nach dem LTE Standard verteilt auf die Basisstationen vorliegen, während sie in Netzen nach dem GSM Standard im BSC und nach dem UMTS Standard im RNC in gebündelter Form vorliegen. Verteilt vorliegende Informationen erfordern ein komplexeres Vorgehen, weshalb dieses im Folgenden beschrieben wird, wobei die auch für Netze mit RNC oder BSC anwendbar sind.

Eine Softwarekomponente dient zur automatischen Kompensation eines Basisstation-Ausfalls, wobei die Softwarekomponente in jede Basisstation des gesamten Mobilfunknetzes integriert wird. Diese Softwarekomponente übernimmt sowohl die Beschaffung der zur Kompensation benötigten Informationen, als auch, im Falle eines Ausfalls, die Kompensation selbst.

Im Falle eines Ausfalls muss zunächst ermittelt werden, welchen Effekt dieser auf die Funkfeldversorgung der Mobilstation hat. Dazu wird eine Liste aller Mobilstationen benötigt, die vor dem Ausfall über die ausgefallene Basisstation mit dem Mobilfunknetz verbunden waren. Es muss damit gerechnet werden, dass im Falle eines Ausfalls keinerlei Kommunikation mit der betroffenen Basisstation mehr möglich ist.

Das folgende Verfahren ermöglicht die Identifizierung der betroffenen Mobilstation im Falle eines Ausfalls, zur Bereitstellung der entsprechenden Liste:

1. Die in jede Basisstation integrierte Softwarekomponente liest zunächst die NCL der Basisstation in der sie arbeitet, ein und erhält somit die IDs aller Nachbar-Basisstationen dieser Basisstation.

2. Die lokale Softwarekomponente einer Basisstation baut nun über das Backbone eine Verbindung zur entfernten Softwarekomponente in allen Nachbar-Basisstationen auf.

3. Über die aufgebaute Verbindung fragt die lokale Softwarekomponente von jeder entfernten Basisstation der lokalen NCL folgende Daten ab:

- IDs der mit der entfernten Basisstation verbundenen Mobilstation
- Die NCL der entfernten Basisstation, d.h. die entfernte NCL

4. Nach Ablauf der Punkte 1-3 liegt somit in der lokalen Softwarekomponente jeder Basisstation eine Liste mit den IDs der Mobilstationen vor, die mit den benachbarten Basisstationen verbunden sind, inklusive der ID der entfernten Basisstation mit der diese Mobilstationen verbunden sind. Weiterhin liegen in der lokalen Softwarekomponente auch die NCL der entfernten Basisstation vor.

5. Um die Aktualität der Liste sicherzustellen werden die Punkte 1 - 3 in regelmäßigen Abständen (etwa im Minutentakt) wiederholt. Durch die relativ geringen Datenmengen (nur die IDs der Basisstationen und Mobilstationen werden übertragen) ist der entstehende zusätzliche Datenverkehr tolerierbar.

6. Im Falle eines Ausfalls wird von einer Netzkomponente zur Ausfallerkennung eine Verbindung zur Softwarekomponente in mindestens einer Nachbar-Basisstation der ausgefallenen Basisstation aufgebaut und die Information übertragen, welche Basisstation (eindeutig identifizierbar anhand der ID) ausgefallen ist.

7. Jede Softwarekomponente, die die Information über den Ausfall einer Basisstation erhalten hat, lädt nun die NCL der ausgefallenen Basisstation. Aufgrund des Vorgehens in den Punkten 1 - 3 ist diese in allen Nachbar-Basisstationen der betroffenen Basisstation verfügbar. Anschließend baut jede Softwarekomponente, die über den Ausfall informiert wurde, eine Verbindung zu jeder Softwarekomponente der Basisstation in der NCL der ausgefallenen Basisstation auf.

8. Mit Abschluss von Punkt 7 ist ein Netzwerk zwischen allen Nachbar-Basisstationen der ausgefallenen Basisstation entstanden. Über dieses Netzwerk, im Folgenden Kompensationsnetzwerk genannt, kann zunächst an jede Softwarekomponente in jeder Basisstation die Information übertragen werden, dass ein Ausfall einer Basisstation eingetreten ist und um welche Basisstation es sich handelt. Die Koordination im Kompensationsnetzwerk übernimmt beispielsweise die Softwarekomponente der Basisstation dieses Netzwerks mit der niedrigsten ID.

9. Die koordinierende Softwarekomponente beginnt mit einer Analyse, welche Mobilstationen sich nach dem Ausfall in einem Bereich ohne Funkfeldversorgung befinden. Dazu wird zunächst die Liste der IDs der Mobilstationen, die vor dem Ausfall mit der mittlerweise ausgefallenen Basisstation verbunden waren, geladen (diese Liste steht aufgrund des Vorgehens in den Punkten 1 - 3 zur Verfügung). Für jede einzelne Mobilstation muss nun geprüft werden, ob sie sich in einer Versorgungslücke befindet oder durch eine benachbarte Basisstation weiterhin versorgt wird. Zu diesem Zwecke fragt die koordinierende Softwarekomponente über das entstandene Netzwerk die IDs aller Mobilstationen ab, die mit den benachbarten Basisstationen der aufgefallenen Basisstation verbunden sind. Durch einen Abgleich der IDs von mit den benachbarten Basisstationen verbundenen Mobilstationen und Mobilstationen, die vor dem Ausfall mit der mittlerweise ausgefallenen Basisstation verbunden waren, lässt sich die benötigte Liste der nach einem Ausfall nicht mehr versorgten Mobilstationen erstellen.

Das beschriebene Verfahren bezieht sich nur auf Mobilstationen, für die vor dem Ausfall eine aktive Datenverbindung bestand. Dies hat zur Ursache, dass nur für diese Mobilstation im Mobilfunknetz die Information vorliegt, mit welcher Basisstation die jeweilige Mobilstation verbunden ist. Für Mobilstationen ohne Datenverbindung (beispielsweise für Mobilstationen im sogenannten idle mode) liegt nur die Information vor, in welchem Gebiet (sogenannte location area) sie sich befinden. Es ist aber möglich, auch jeder Mobilstation im idle mode eine Basisstation zuzuordnen, was allerdings zu erhöhtem Datenverkehr im Mobilfunknetz führt.

Nach Abschluss der Identifizierung der betroffenen Mobilstation im Falle eines Ausfalls, kann ein Kompensationsverfahren, zur Kompensation des Ausfalls der Basisstation (BS) des Mobilfunknetzes, auf Basis der gewonnenen Informationen durchgeführt werden. Dieses Verfahren kann unmittelbar nach Abschluss der Ermittlung der von einem Basisstation-Ausfall betroffenen Mobilstation angewandt werden. So kann zum Beispiel eine automatische Kompensation der nach einem Basisstationsausfall entstandenen Versorgungslücke erfolgen. Es verwendet die in Punkt 9 ermittelten Informationen und setzt auch auf das in Punkt 7 entstandene Kompensationsnetzwerk auf. Die Nummerierung einzelnen Schritte wird daher fortgesetzt.

10. Zunächst wird eine Analyse der in Punkt 9 ermittelten Daten vorgenommen. Sofern alle von einem Basisstation-Ausfall betroffenen Mobilstation ohne Kompensationsmaßnahmen wieder eine Verbindung zum Mobilfunknetz herstellen konnten, ist keine Kompensation erforderlich. Dies kann beispielsweise in einem städtischen Gebiet mit einer hohen räumlichen Dichte an Basisstationen der Fall sein. In ländlichen Gebieten mit geringerer Dichte ist dagegen zu erwarten, dass bei einem Basisstation-Ausfall eine Versorgungslücke entstanden ist. Im Folgenden wird das weitere Vorgehen für den Fall, dass eine oder mehrere Mobilstationen nach dem Basisstation-Ausfall keine ausreichende Funkfeldversorgung mehr erhalten, beschrieben.

11. Die Koordination der Kompensationsmaßnahmen übernimmt wiederum die in Punkt 8 ausgewählte Softwarekomponente der Basisstation mit der niedrigsten ID.

Um ein bestmögliches Kompensationsschema zu erreichen wird erfindungsgemäß ein heuristisches Verfahren verwendet, welches anhand der nachfolgenden bevorzugten Ausführungsform erläutert wird, verwendet.

Aufgrund des voranbeschriebenen Verfahrens liegen der Software der koordinierenden Basisstation folgende Informationen vor:

- Die NCL der ausgefallenen Basisstation und somit alle BS_IDs, die für eine Kompensation in Frage kommen
- Alle MS IDs der Mobilstationen, die von einem Ausfall einer Basisstation betroffen sind.

12. Erfindungsgemäß müssen nun zusätzliche Informationen von der Software der koordinierenden Basisstation ermittelt werden um den im nachfolgenden beschriebenen Kompensationsalgorithmus richtig zu justieren. Die zusätzlichen Informationen bestehen aus allen Parametern, die Einfluss auf die Kompensationsfähigkeit der einzelnen möglichen kompensierenden Basisstation haben. Hier werden die aktuellen Einstellungen benötigt, wie z.B. die aktuelle Sendeleistung der Basisstation oder der aktuelle Neigungswinkel des Antennenelements einer Basisstation. Ebenso werden Maximalwerte dieser Parameter benötigt.

13. Sind nun alle benötigten Informationen vorhanden kann die Softwarekomponente der koordinierenden Basisstation beginnen, den Kompensationsalgorithmus zu initiieren. Zunächst muss der Wertebereich der Kompensationsparameter, wie zum Beispiel der Sendeleistung bestimmt werden. Dies geschieht, indem die maximale Sendeleistung $P_{maX}$ von der aktuellen Sendeleistung $P_{akt}$ subtrahiert wird. Die sich ergebende Differenz bildet die maximale Obergrenze der zusätzlichen Sendeleistung. Abhängig von der Granularität mit der die Sendeleistung konfiguriert werden kann, existiert eine Anzahl von Stufen die Sendeleistung einer Basisstation zu erhöhen. Dies muss für alle kompensierenden Basisstationen berechnet werden und anschließend gespeichert werden. Eine ähnliche Vorgehensweise muss bei Berechnungen für andere Kompensationsparameter, wie z.B. den Neigungswinkel des Antennenelements, durchgeführt werden.

14. Sind alle Wertebereiche für alle veränderlichen Parameter für alle Basisstationen berechnet und gespeichert, wird nun zunächst eine Startkonfiguration erzeugt. Dazu berechnet die Softwarekomponente der koordinierenden Basisstation eine Startkonfiguration, die die Information enthält, welche Basisstationen mit welchen Parametereinstellungen den Ausfall einer Basisstation kompensieren sollen.

15. Nachdem die Konfigurationen berechnet wurden, teilt die Software der koordinierenden Basisstation allen anderen Basisstationen des Kompensationsnetzwerks die neuen Konfigurationen mit. Diese werden nun von den einzelnen Softwareelementen in den Basisstationen geladen. Somit ist der erste Zustand des Kompensationsnetzwerkes erreicht.

16. Für die Bewertung der erfolgreichen Kompensation testet die Softwarekomponente der koordinierenden Basisstation nach einer gewissen Zeit, ob Mobilstationen der unter Punkt 9 erzeugten Liste wieder im Netz angebunden sind. Hierzu wird ein Abgleich vorgenommen um herauszufinden wie viele Mobilstationen durch die angewandte Kompensationskonfiguration wieder an das Netzwerk angebunden wurden. Dies kann in zwei verschiedenen Vorgehensweisen erfolgen. Entweder senden die kompensierenden Basisstationen nach einer definierten Verzögerungszeit alle MS_IDs an die koordinierende Basisstation. Jene führt dann einen Abgleich mit der unter Punkt 9 erzeugten Liste durch und summiert die Übereinstimmungen, so dass bekannt ist, wie viele Mobilstationen durch den Kompensationsschritt wieder an das Netzwerk angebunden werden konnten. Oder der Abgleich wird durchgeführt indem die Software der koordinierenden Basisstation die gesamte Liste mit den IDs der betroffenen Mobilstationen an die kompensierenden Basisstation sendet. Die Softwareelemente in den kompensierenden Basisstationen überprüfen, ob sich eine oder mehrere der Mobilstationen wieder an die Basisstation angebunden haben und antworten mit der Summe der wieder angebundenen Mobilstationen. Die Software der kompensierenden Basisstation summiert dann alle empfangenen Werte auf und erhält so die benötigte Information.

17. Aufgrund der Kenntnis der erzeugten Liste unter Punkt 9 und der erzeugten Information unter Punkt 16, kann nun ein prozentualer Erfolg der Wiederanbindung der vom Ausfall betroffenen Mobilstationen errechnet werden. Vorzugsweise wird folgende Gleichung hierzu verwendet:'

$$f(x) = \frac{\sum\limits_{m} MS_{re_m}(x)}{MS_{out}} * w_0 \ + \sum\limits_{m}(\frac{1}{\sum\limits_{n} KP_{m,n}(x)} * w_n)$$

In Gleichung 1 stellt $MS_{re}$ die Anzahl der Mobilstationen dar, welche durch die Kompensation einer einzelnen gewählten Basisstation m wieder an das Mobilfunknetz angebunden werden konnten. Die Summe von allen $MS_{re}$ über m gibt die gesamte Anzahl aller wieder angebundenen Mobilstationen der zuvor gewählten Kompensationskonfiguration x im Kompensationsnetzwerk an. $MS_{out}$ ist die Summe aller Mobilstationen, die unter Punkt 9 ermittelt wurden, also die Anzahl der Mobilstationen, welche nach einem Basisstationsausfall nicht mehr an das Netzwerk angebunden werden konnten. Dividiert man nun die Summe von $MS_{re}$ durch $MS_{out}$ erhält man einen Wert, der den Erfolg der Kompensation durch die gewählte Konfiguration bewertet. Je näher sich dieser Wert an den Wert eins annähert, desto besser ist die Kompensation. Ideal wäre der Wert 1, dann wären alle verlorenen Mobilstationen wieder an das Netzwerk angebunden. Zusätzlich werden in Gleichung 1 alle Kompensationsparameter n (KP) wie z.B. die Sendeleistung, die zur Kompensation an einer Basisstation verändert wurden, berücksichtigt. Dies erfolgt, um während des Kompensationsalgorithmus genau bewerten zu können, welche gewählten Konfigurationen welchen Einfluss auf das Netzwerk haben. Z.B. hat die Erhöhung der Sendeleistung einzelner Basisstationen evtl. negative Auswirkungen auf umliegende Basisstationen. Somit wird vermieden, dass Konfigurationen gewählt werden, die unnötig hohe Störungen erzeugen. Der Faktor w ist eine Gewichtung zur Priorisierung und drückt aus, welcher Summand der Formel wie viel Einfluss auf den Erfolg der Kompensationskonfiguration hat. Der Faktor $W_o$ muss im Verhältnis zu $W_m$ immer so gewählt werden, dass der Erfolg der Wiederanbindung der Mobilstation höchste Priorität besitzt. Das Verhältnis zwischen verschiedenen Gewichtungen $W_n$ der KP n muss so gewählt werden, dass die Summe über n einzelner $KP_{m,n}$ der KP mit einem höheren Einfluss auf das Netzwerk ein schlechteres bzw. niedrigeres Ergebnis liefern.

18. Nachdem die erste Kompensationskonfiguration durch Gleichung 1 bewertet wurde, wird nun die durchgeführte Kompensationskonfiguration und der errechnete Wert durch die Softwarekomponente in der koordinierenden Basisstation gespeichert.

19. Ist dies erfolgt, wird eine andere zufällige Kompensationskonfiguration gewählt und die gleiche Prozedur von Punkt 15 bis Punkt 19 wiederholt. Eine bestimmte Anzahl der Wiederholungen ist vorher definiert.

20. Nachdem die Anzahl der Wiederholungen durchlaufen wurden, werden nun durch die koordinierende Basisstation alle gespeicherten Kompensationsergebnisse miteinander verglichen und anschließend in zwei Gruppen aufgeteilt. Eine Gruppe besteht aus einer bestimmten Anzahl bester Kompensationsergebnisse und die andere aus den restlichen schlechteren Kompensationsergebnissen.

21. Nun wird die Gruppe mit den schlechteren Kompensationsergebnissen gelöscht.
Nachdem die besten Kompensationsergebnisse des ersten Konfigurationssatzes zur Verfügung stehen, muss nun ein weiterer Konfigurationssatz erzeugt werden. Dieser setzt sich aus genauso vielen Kompensationskonfigurationen zusammen wie der erste Konfigurationssatz. Während der erste Konfigurationssatz noch zufällig erzeugt wurde, werden alle Weiteren immer in Abhängigkeit von den besten Lösungen des vorangegangenen Konfigurationssatzes erzeugt, um somit eine sehr gute Kompensationskonfiguration nach relativ wenigen (im Verhältnis zu den möglichen) Konfigurationssätzen zu erzielen.

22. Da alle Konfigurationssätze sich abhängig von der Startkonfiguration zusammensetzen, muss vermieden werden, dass durch die gewählte Startkonfiguration bestimmte mögliche Konfigurationen nicht erreicht werden. Somit ist es notwendig nachfolgende Konfigurationssätze zusätzlich zu verändern und damit ein besseres Konfigurationsergebnis erreichen zu können. Die Software der koordinierenden Basisstation verändert also nach der Erzeugung eines neuen Konfigurationssatzes, eine Kompensationskonfiguration mit einer bestimmten Wahrscheinlichkeit. Die Kompensationskonfiguration kann innerhalb des Wertebereichs der KP verändert werden.

23. Nun wird die beschriebene Prozedur von Punkt 15 bis 23 mehrmals wiederholt.

24. Nach einer bestimmten Anzahl von Wiederholungen der Prozedur stoppt der Kompensationsalgorithmus. Die nun ermittelte Kompensationskonfiguration wird nun dauerhaft an den beteiligten Basisstationen konfiguriert und alle anderen gespeicherten Konfigurationssätze werden durch die Software der koordinierenden Basisstation gelöscht. Somit ist eine optimale Kompensation eines Basisstationsausfalls erreicht.

Fig. 2 zeigt das aus Fig. 1 bekannte Mobilfunknetz, allerdings mit drei Mobilstationen. In diesem Beispiel entsprechen die NCL der einzelnen Basisstationen der räumlichen Nachbarschaft. D.h die NCL von Basisstation 11 z.B. enthält die Basisstationen 12 bis 17, die NCL von Basisstation 18 die Basisstationen 14 und 15.
Im Folgenden werden die aus dem vorherigen Abschnitt bekannten Einzelschritte an einem Ausführungsbeispiel erläutert.
1. Die in Basisstation 12 arbeitende Softwarekomponente liest die NCL von Basisstation 12 ein. Die NCL enthält folgende Basisstationen: 11, 13, 17. Der gleiche Vorgang findet in allen anderen Basisstationen statt.
2. Die Softwarekomponente in Basisstation 12 baut über das Backbone 3 eine Verbindung zu der Softwarekomponente in Basisstation 11, 13 und 17 auf. Der gleiche Vorgang findet in allen anderen Basisstationen statt.
3. Über die aufgebaute Verbindung liest die Softwarekomponente in Basisstation 12 folgende Informationen:

- IDs der mit Basisstation 11 verbundenen Mobilstation (41, 42, 44, 45)
- IDs der mit Basisstation 13 verbundenen Mobilstation (keine)
- IDs der mit Basisstation 17 verbundenen Mobilstation (keine)
- NCL von Basisstation 13 (Basisstation 11, 12, 14)
- NCL von Basisstation 11 (Basisstation 12-17)
- NCL von Basisstation 17 (Basisstation 11, 12, 16)

Der gleiche Vorgang findet in allen anderen Basisstationen statt.
4. In Basisstation 12 liegen nun die sowohl die NCL aller Nachbar-Basisstationen als auch die Liste aller mit den Nachbar-Basisstationen verbundenen Mobilstationen vor.
5. Vorgang in 1 - 3 wird regelmäßig wiederholt, um die gewonnenen Daten aktuell zu halten. Dies hat im vorliegenden Beispiel keine Auswirkungen, da angenommen wird, dass die Mobilstationen stationär sind.
An dieser Stelle wird ein Ausfall von Basisstation 11 angenommen. Es wird weiterhin angenommen, dass Mobilstationen 41, 42, 44 und 45 dadurch zunächst die Mobilfunkverbindung verlieren. Im Gegensatz zu Mobilstationen 41, 44 und 45 ist Mobilstation 42 anschließend in der Lage, aufgrund der räumlichen Nähe eine Verbindung zu Basisstation 13 aufzubauen. Mobilstation 43 ist vom Ausfall nicht betroffen.

6. Die Netzkomponente zur Ausfallerkennung erkennt den Ausfall von Basisstation 11 und meldet dies in diesem Beispiel an die Softwarekomponente in Basisstation 12.

7. Die Softwarekomponente in Basisstation 12 lädt nun die zuvor ermittelte NCL von Basisstation 11. Anschließend wird von der Softwarekomponente in Basisstation 12 eine Verbindung zu allen Basisstation in der NCL von Basisstation 11, d.h. zu Softwarekomponenten der Basisstationen 13-17, aufgebaut.

8. Mit Abschluss von Punkt 7 hat sich das Kompensationsnetzwerk gebildet. Es besteht aus den Basisstationen 12-17. Aufgrund ihrer niedrigsten ID übernimmt die Softwarekomponente in Basisstation 12 die Koordination des Netzwerks und informiert die Softwarekomponenten in allen anderen Basisstationen des Kompensationsnetzes über den Ausfall von Basisstation 11.

9. Die Softwarekomponente von Basisstation 12 beginnt mit einer Analyse der Ausfallauswirkungen. Dazu wird zunächst abgefragt, welche Mobilstationen mit dem Kompensationsnetzwerk verbunden sind (Ergebnis: Mobilstation 42 und 43). Dies wird mit der Liste der vor dem Ausfall mit Basisstation 11 verbundenen Mobilstationen (41, 42, 44 und 45) abgeglichen. Ergebnis: Mobilstationen 41, 44 und 45 verfügen seit dem Ausfall über keine Funknetzversorgung mehr.

10. Da festgestellt wurde, dass Mobilstationen 41, 44 und 45 nicht mehr versorgt werden, muss mit Kompensationsmaßnahmen begonnen werden.

11. Unter Punkt 10 wurde festgestellt das Mobilstationen 41, 44 und 45 über keine Funknetzversorgung verfügen. Eine Liste mit den IDs der vom Ausfall betroffenen Mobilstationen wird in der koordinierenden Basisstation 12 gespeichert (siehe Tabelle 1)

**Tabelle 1**

| MS ID |
|-------|
| 41 |
| 44 |
| 45 |

12. Zunächst fordert die Software der Basisstation 12 Informationen über aktuelle Konfigurationen aus dem gebildeten Kompensationsnetzwerks von jeder partizipierenden Basisstation an. Dies sind zum einen Maximalwerte einzelner Parameter die zur Kompensation verändert werden könnten und zum anderen aktuelle Einstellungen jener Parameter sowie die Granularität der einzelnen Parameter. In diesem Beispiel wird zur Vereinfachung angenommen, dass nur die Sendeleistung der Basisstation des Kompensationsnetzwerkes als Kompensationsmaßnahme verändert wird. Nachdem Empfang der benötigten Informationen hat die Software von Basisstation 12 alle Informationen, wie in Tabelle 2 dargestellt zur Verfügung.

**Tabelle 2**

| BS_ID | 12 | 13 | 14 | 15 | 16 | 17 |
|-------|----|----|----|----|----|----|
| Granularität (dB) | 0.5 | 0.5 | 0.5 | 0.5 | 0.5 | 0.5 |
| maximale Sendeleistung (dBm) | 46 | 46 | 46 | 46 | 46 | 46 |
| aktuelle Sendeleistung (dBm) | 42 | 42 | 42 | 42 | 42 | 42 |

13. Nun berechnet die Software von Basisstation 12 für alle Basisstationen des Kompensationsnetzwerks (Basisstation 12-17) mögliche Konfigurationsbereiche der Sendeleistung. Z.B. wird für Basisstation 13 die aktuelle Sendeleistung von der maximalen Sendeleistung subtrahiert und durch die Granularität geteilt. Hieraus ergeben sich (46dBm-42dBm)/0.5dB = 8 Stufen zur Erhöhung der Sendeleistung von Basisstation 13. Hinzu kommt eine Stufe die es erlaubt die aktuelle Sendeleistung beizubehalten. Es sind also 9 Stufen wie in Tabelle 3 aufgeführt vorhanden.

**Tabelle 3**

| Stufen zur Erhöhung der Sendeleistung | 1 | 2 | 3 | 4 | 5 | 6 | 7 | 8 | 9 |
|---------------------------------------|----|------|----|------|----|------|----|------|----|
| Sendeleistung (dBm) | 42 | 42.5 | 43 | 43.5 | 44 | 44.5 | 45 | 45.5 | 46 |

14. Hat die Software in Basisstation 12 für alle Basisstationen des Kompensationsnetzwerks mögliche Kompensationsstufen berechnet und gespeichert, wird als nächster Schritt die Startkonfiguration des heuristischen Verfahrens berechnet. Diese setzt sich in diesem Beispiel zufällig zusammen. In Tabelle 4 ist die zufällig berechnete Startkonfiguration aufgezeigt.

**Tabelle 4**

| BS_ID | 12 | 13 | 14 | 15 | 16 | 17 |
|-------|----|----|----|----|----|----|
| Stufen | 7 | 1 | 2 | 3 | 4 | 1 |

15. Die einzelnen Startkonfigurationen der Basisstation 12 - 17 werden nun von der Software der Basisstation 12 an die jeweilige Basisstation über das Backbone 3 gesendet. Nachdem die Konfigurationen empfangen wurden, werden die Basisstationen durch ihre Software umkonfiguriert, z.B. Basisstation 16 wird auf Stufe 4 umkonfiguriert also wird die Sendeleistung auf 43.5 dBm gesetzt.

16. Nachdem Basisstationen 12 - 17 nach Tabelle 4 umkonfiguriert wurden, wartet die Software aller Basisstationen (12 - 17) für 3 Sekunden. Nach dieser Wartezeit analysiert jede einzelne Software welche Mobilstation an der jeweiligen Basisstation angebunden ist und speichert diese Liste. Folgende Mobilstationen sind nun an die jeweiligen Basisstation angebunden und in der Liste gespeichert:

- BS 12: MS 42,41
- BS 13: keine MS angebunden
- BS 14: MS 43
- BS 15: keine MS angebunden
- BS 16: keine MS angebunden
- BS 17: keine MS angebunden

17. Im nächsten Schritt wird ein Abgleich mit der in Tabelle 1 aufgezeigten Liste und der in Punkt 16 erzeugten Liste durchgeführt. Dies geschieht entweder indem die unter Punkt 16 erzeugte Liste von jeder Software der Basisstationen 12 - 17 an die Software der koordinierenden Basisstation 12 gesendet wird und der Abgleich in der Basisstation 12 geschieht. Oder die koordinierende Basisstation 12 sendet die in Tabelle 1 dargestellte erzeugte Liste an alle Basisstationen des Kompensationsnetzwerks. Jede Basisstation 12 -17 macht dann einen Abgleich und sendet das Ergebnis an die Basisstation 12. In diesem Beispiel wird angenommen, das letzteres geschieht.

18. Also empfängt die Basisstation 12 folgende Ergebnisse der Abgleiche:

- BS12:1
- BS 13-17 : 0

Die Software von Basisstation 12 verwendet nun Gleichung 1 um die Kompensationsnetzwerkkonfiguration zu bewerten. Die Summe der Ergebnisse der einzelnen Abgleiche wird durch die Summe vorkommender Mobilstation aus Tabelle 1 geteilt. Die Gewichtung $W_0$ beträgt 1. Die Gewichtung für den Kehrwert der Summe der Sendeleistungen $W_1$ beträgt ebenfalls 1. Somit sieht die Berechnung wie folgt aus:

$$f(1) = (1 / 3) * 1 + (1/258) * 1 = 0.33721$$

Das Ergebnis wird mit der zugehörigen Konfiguration in einer Tabelle durch die Software von Basisstation 12 abgespeichert.

19. Nun wird die beschriebene Vorgehensweise 20-mal wiederholt, da ein Kompensationssatz mit 20 Konfigurationen definiert wurde. In Tabelle 5 sind die Ergebnisse der Wiederholungen dargestellt.

Tabelle 5

| Konfigurations-nummer x | Ergebnis f(x) |
|--------------------------|---------------|
| 1 | 0.33721 |
| 2 | 0.00211 |

(fortgesetzt)

| Konfigurations-nummer x | Ergebnis f(x) |
|---|---|
| 3 | 0.33467 |
| 4 | 0.66978 |
| 5 | 0.00432 |
| 6 | 0.00567 |
| 7 | 0.00231 |
| 8 | 0.33675 |
| 9 | 0.00199 |
| 10 | 0.33567 |
| 11 | 0.33444 |
| 12 | 0.00092 |
| 13 | 0.00123 |
| 14 | 0.00465 |
| 15 | 0.33423 |
| 16 | 0.00677 |
| 17 | 0.66896 |
| 18 | 0.00398 |
| 19 | 0.33674 |
| 20 | 0.00119 |

20. Im nächsten Schritt werden nun durch die Software in Basisstation 12 die schlechtesten 10 Ergebnisse, also die kleinsten Werte und deren Konfigurationen aus Tabelle 5 gelöscht. Die besten 10 Kompensationskonfigurationen des Kompensationssatzes bleiben erhalten. Aus den Verbliebenen wird nun der nächste Kompensationssatz gebildet.

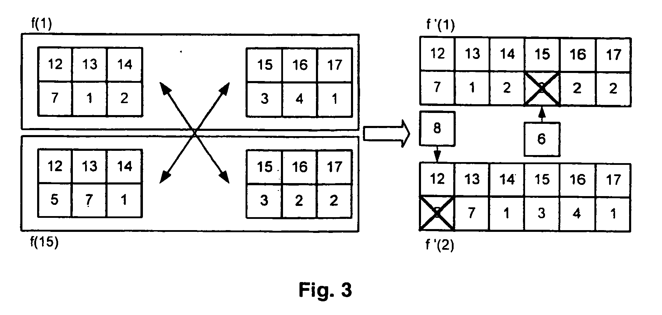

21. Hierzu werden jeweils zwei beste Konfigurationen zufällig aus der Tabelle entnommen und diese an einer zufälligen Stelle getrennt. Dadurch werden vier Teilkonfigurationen erzeugt die wie in Fig. 3 dargestellt zu zwei neuen Konfigurationen zusammengesetzt werden.

22. Um zu verhindern, dass mögliche bessere Konfigurationen aufgrund der zufällig gewählten Startkonfiguration nicht erreicht werden, berechnet die Softwarekomponente von Basisstation 12 nun zufällig eine Veränderung der neu generierten Konfigurationen. Mit einer Wahrscheinlichkeit von 10 % wird die Kompensationsstufe einer einzelnen Basisstation verändert (siehe Fig. 3).

23. Der Vorgang in Punkt 21 und 22 wird nun solange wiederholt, bis 20 neue Konfigurationen und somit ein neuer Konfigurationssatz erzeugt wurde. Danach werden wieder Punkt 15 bis 22 durchgeführt.

24. Nach zehn Konfigurationssätzen hat sich eine optimale Lösung ergeben. Diese Konfiguration bleibt nun dauerhaft bestehen, bis die ausgefallene Basisstation wieder in Betrieb genommen wird. Danach werden alle kompensierenden Basisstationen wieder auf Normalbetrieb gesetzt.

Folgende Anteile des Ausführungsbeispiels sind von der Ausführungsform abhängig und wurden in diesem Ausführungsbeispiel sehr einfach gewählt:

- Anzahl der Kompensationsparameter
- Bewertung der Kompensationsergebnisse
- Ermittlung des Startkonfigurationssatzes
- Wahrscheinlichkeit der Veränderung einer Kompensationskonfiguration

**Patentansprüche**

1.  Verfahren zur Ermittlung von Konfigurationsparametern für ein Kompensationsnetzwerk für die Kompensation einer ausgefallenen Basisstation eines Mobilfunknetzes, wobei das Kompensationsnetzwerk mindestens eine kompensierende Basisstation aufweist, mit den Schritten nach dem Ausfall der Basisstation.

a Ermitteln von aktuellen Informationen über mindestens einen Konfigurationsparameter von jeder der mindestens einen kompensierenden Basisstation;

b Ermitteln möglicher Konfigurationswerte oder Konfigurationsbereiche des mindestens einen Konfigurationsparameters für jede der mindestens einen kompensierenden Basisstation aus den ermittelten aktuellen Konfigurationsparameterinformationen;

c Bestimmen, aus den möglichen Konfigurationswerten oder Konfigurationsbereichen, einer Neukonfiguration für die mindestens eine kompensierende Basisstation des Kompensationsnetzwerkes, wobei die Neukonfiguration aus einem vorhandenen Konfigurationssatz gewählt wird;

d Herstellen der Neukonfiguration des Kompensationsnetzwerkes durch entsprechendes Umkonfigurieren jeder der mindestens einen kompensierenden Basisstation;

e Ermitteln der nach erfolgtem Schritt d) mit den Basisstationen des Kompensationsnetzwerks verbundenen Mobilstationen und Vergleichen der ermittelten verbundenen Mobilstationen mit den ursprünglich nach dem Ausfall der Basisstation mit den Basisstationen des Kompensationsnetzwerks verbundenen Mobilstationen;

f Bewerten der aktuellen Konfiguration des Kompensationsnetzwerkes;

g Wiederholen der Schritte c) bis f) entsprechend einer vorgegebenen Anzahl, um einen Konfigurationssatz zu erhalten; und

h Ermitteln einer besten Parameterkonfiguration aus den in Schritt f) erhaltenen Bewertungen für jede Konfiguration.

2. Verfahren nach Anspruch 1, wobei die Schritte a) bis h) von einer Koordinationsbasisstation, die eine der Basisstationen des Kompensationsnetzwerkes ist, koordiniert werden.

3. Verfahren nach Anspruch 1 oder 2, wobei die Konfigurationsparameter Sendeleistung und/oder Neigungswinkel des Antennenelements sind und die aktuellen Informationen den aktuellen Wert, den Maximalwert und die Granularität des jeweiligen Konfigurationsparameters aufweisen.

4. Verfahren nach Anspruch 3, wobei in Schritt b) die möglichen Konfigurationsbereiche der Differenz aus jeweiligem Maximalwert und aktuellem Wert entsprechen, und die Konfigurationswerte den sich aus der Differenz und Granularität ergebenden Stufen entsprechen.

5. Verfahren nach einem der vorstehenden Ansprüche, wobei in Schritt c) die Neukonfiguration zufällig bestimmt wird.

6. Verfahren nach einem der Ansprüche 2 bis 5, wobei in Schritt e) die kompensierenden Basisstationen das Ermittlungsergebnis an die koordinierende Basisstation übermittelt und das Vergleichen in der koordinierenden Basisstation durchgeführt wird.

7. Verfahren nach einem der Ansprüche 2 bis 5, wobei in Schritt e) die kompensierenden Basisstationen das Vergleichen ausführen und das jeweilige Vergleichsergebnis an die koordinierende Basisstation übermitteln.

8. Verfahren nach einem der vorstehenden Ansprüche, wobei in Schritt f) die Bewertung nach folgender Gleichung erfolgt:

$$f(x) = \frac{\sum_m MS_{re_m}(x)}{MS_{out}} * w_0 + \sum_m \left( \frac{1}{\sum_n KP_{m,n}(x)} * w_n \right)$$

mit:

$MS_{re}$: Anzahl der Mobilstationen, welche durch die Kompensation einer einzelnen gewählten Basisstation m wieder an das Mobilfunknetz angebunden werden konnten

x: Kompensationskonfiguration im Kompensationsnetzwerk

$MS_{out}$: Summe aller Mobilstationen, die nach einem Basisstationsausfall nicht mehr an das Netzwerk angebunden werden konnten

KP: Kompensationsparameter, die an einer Basisstation verändert wurden
w: Gewichtung zur Priorisierung
n: Anzahl der Kompensationsparameter, die an einer Basisstation verändert werden können.

9. Verfahren nach einem der Ansprüche 5 bis 8, wobei Schritt h) aufweist:

Ermitteln eines weiteren Satzes an neuen Konfigurationen in Abhängigkeit von den besten Bewertungen der zufällig erzeugten Konfigurationen des vorhergehenden Konfigurationssatzes, wobei der neue Konfigurationssatz die gleiche Anzahl an Konfigurationen wie der vorhergehende Konfigurationssatz aufweist;
entsprechendes Umkonfigurieren jeder der mindestens einen kompensierenden Basisstation;
Ermitteln der mit den Basisstationen des Kompensationsnetzwerks verbundenen Mobilstationen und Vergleichen der ermittelten verbundenen Mobilstationen mit den ursprünglich nach dem Ausfall der Basisstation mit den Basisstationen des Kompensationsnetzwerks verbundenen Mobilstationen;
Bewerten der jeweiligen Konfiguration der Basisstationen des Kompensationsnetzwerkes.

10. Verfahren nach einem der vorstehenden Ansprüche, wobei Schritt h) aufweist:

H1 Gruppieren aller Bewertungsergebnisse und zugehöriger Kompensationsnetzwerk-Konfiguration in eine erste Gruppe mit einer vorgegebenen Anzahl der besten Bewertungsergebnisse und einer zweiten Gruppe mit den übrigen Bewertungsergebnissen;
H2 Zufälliges Auswählen von jeweils k Konfigurationen aus der ersten Gruppe und jeweiliges Unterteilen der ausgewählten Konfigurationen an zufälliger Stelle, um dadurch 2k Teilkonfigurationen zu erhalten;
H3 Zusammensetzen der erhaltenen 2k Teilkonfigurationen zu k neuen Konfigurationen;
H4 Verändern der neu erzeugten Konfigurationen;
H5 Wiederholen der Schritte H2 bis H4 bis ein neuer Konfigurationssatz mit ebenso vielen Konfigurationen wie der ursprüngliche Konfigurationssatz erzeugt ist;
H6 Wiederholen der Schritte c) bis h) mit, den Konfigurationen des neuen Konfigurationssatzes bis ein Abbruchkriterium erfüllt ist.

11. Verfahren nach Anspruch 10, wobei das Abbruchkriterium eine vorgegebene Anzahl zu durchlaufender Konfigurationssätze ist.

12. Verfahren nach Anspruch 11, wobei die sich bei Abbruch ergebende beste Konfiguration als bestmöglichen Konfiguration beibehalten wird, bis die ausgefallene Basisstation wieder in Betrieb genommen wird.

13. Verfahren nach Anspruch 10, 11 oder 12, wobei k < N/2 ist, wobei N die Gesamtzahl der in der ersten Gruppe enthaltenen Konfigurationen ist, und k vorzugsweise gleich 2 ist.

## Claims

1. Method for ascertaining configuration parameters for a compensation network for the compensation of a failed base station of a mobile radio network, wherein the compensation network has at least one compensating base station, having the following steps subsequent to the failure of the base station:

a determining current information on at least one configuration parameter from each of the at least one compensating base stations;
b determining possible configuration values or configuration ranges of the at least one configuration parameter for each of the at least one compensating base stations from the current configuration parameter information that was determined;
c determining, from the possible configuration values or configuration ranges, a new configuration for the at least one compensating base station of the compensation network, wherein the new configuration is selected from an existing set of configurations;
d producing the new configuration of the compensation network by appropriately reconfiguring each of the at least one compensating base stations;
e determining the mobile stations connected to the base stations of the compensation network after step d) has been accomplished, and comparing the determined, connected mobile stations with the mobile stations originally connected to the base stations of the mobile network after the failure of the base station;

f evaluating the current configuration of the compensation network;
g repeating steps c) through f) in accordance with a predetermined number in order to obtain a configuration set; and
h determining a best parameter configuration from the evaluations obtained in step f) for each configuration.

2. Method according to claim 1, wherein the steps a) through h) are coordinated by a coordination base station, which is one of the base stations of the compensation network.

3. Method according to claim 1 or 2, wherein the configuration parameters are transmit power and/or angle of inclination of the antenna element, and the current information has the current value, the maximum value, and the granularity of the applicable configuration parameter.

4. Method according to claim 3, wherein the possible configuration ranges in step b) correspond to the difference between the applicable maximum value and current value, and the configuration values correspond to the steps resulting from the difference and granularity.

5. Method according to any one of the preceding claims, wherein the new configuration is determined randomly in step c).

6. Method according to any one of claims 2 through 5, wherein, in step e), the compensating base stations transmit the determined result to the coordinating base station, and the comparison is carried out in the coordinating base station.

7. Method according to any one of claims 2 through 5, wherein, in step e), the compensating base stations carry out the comparison and transmit the applicable result of the comparison to the coordinating base station.

8. Method according to any one of the preceding claims, wherein the evaluation in step f) is carried out using the following equation:

$$f(x) \approx \frac{\sum_m MS_{re_m}(x)}{MS_{out}} * w_0 + \sum_m \left( \frac{1}{\sum_n KP_{m,n}(x)} * w_n \right)$$

where:

$MS_{re}$: number of mobile stations that could be reconnected to the mobile radio network through compensation of an individual, selected base station m
x: compensation configuration in the compensation network
$MS_{out}$: sum of all mobile stations that could no longer be connected to the network after a base station failure
KP: compensation parameters that were changed at a base station
w: weighting for prioritization
n: number of compensation parameters that can be changed at a base station.

9. Method according to any one of claims 5 through 8, wherein step h) has:

determination of an additional set of new configurations as a function of the best evaluations of the randomly generated configurations of the preceding configuration set, wherein the new configuration set has the same number of configurations as the preceding configuration set;
corresponding reconfiguration of each of the at least one compensating base stations;
determination of the mobile stations connected to the base stations of the compensation network, and comparison of the determined, connected mobile stations with the mobile stations originally connected to the base stations of the compensation network after the failure of the base station;
evaluation of the applicable configuration of the base stations of the compensation network.

10. Method according to any one of the preceding claims, wherein step h) has:

H1 grouping of all evaluation results and associated compensation network configuration in a first group with a predetermined number of the best evaluation results and a second group with the remaining evaluation results;
H2 randomly selecting k configurations at a time from the first group and
each time subdividing selected configurations at a random point in order to thereby obtain 2k subconfigurations;
H3 combining the 2k subconfigurations obtained into k new configurations;
H4 changing the newly generated configurations;
H5 repeating steps H2 through H4 until a new configuration set with exactly as many configurations as the original configuration set has been generated;
H6 repeating steps c) through h) with the configurations from the new configuration set until a termination criterion is satisfied.

11. Method according to claim 10, wherein the termination criterion is a predetermined number of configuration sets to be processed.

12. Method according to claim 11, wherein the best configuration resulting at termination is retained as the best possible configuration until the failed base station is brought back into operation.

13. Method according to claim 10, 11, or 12, wherein k < N/2, wherein N is the total number of the configurations contained in the first group, and k preferably is equal to 2.

## Revendications

1. Procédé de recherche de paramètres de configuration d'un réseau de compensation pour la compensation d'une station de base défaillante d'un réseau de radiocommunication mobile, le réseau de compensation comportant au moins une station de base compensatrice, comprenant les étapes suivantes après la défaillance de la station de base :

a) recherche d'informations actuelles sur au moins un paramètre de configuration de chacune de la au moins une station de base compensatrice ;
b) recherche de valeurs ou zones possibles de configuration du au moins un paramètre de configuration pour chacune de la au moins une station de base compensatrice à partir des informations de paramètres de configuration actuelles obtenues ;
c) détermination, à partir des valeurs ou zones possibles de configuration, d'une nouvelle configuration pour la au moins une station de base compensatrice du réseau de compensation, la nouvelle configuration étant sélectionnée parmi un jeu de configurations existant ;
d) réalisation de la nouvelle configuration du réseau de compensation par reconfiguration correspondante de chacune de la au moins une station de base compensatrice ;
e) recherche des stations mobiles reliées aux stations de base du réseau de compensation après l'exécution de l'étape d), et comparaison des stations mobiles reliées obtenues avec les stations mobiles initialement reliées aux stations de base du réseau de compensation après la défaillance de la station de base ;
f) évaluation de la configuration actuelle du réseau de compensation ;
g) répétition des étapes c) à f) selon un nombre prédéfini pour obtenir un jeu de configurations ; et
h) recherche d'une meilleure configuration de paramètres à partir des évaluations obtenues à l'étape f) pour chaque configuration.

2. Procédé selon la revendication 1, dans lequel les étapes a) à h) sont coordonnées par une station de base de coordination qui est l'une des stations de base du réseau de compensation.

3. Procédé selon l'une des revendications 1 ou 2, dans lequel les paramètres de configuration sont la puissance d'émission et/ou l'angle d'inclinaison de l'élément d'antenne et les informations actuelles comportent la valeur actuelle, la valeur maximale et la granularité du paramètre de configuration respectif.

4. Procédé selon la revendication 3, dans lequel, à l'étape b), les zones possibles de configuration correspondent à la différence entre la valeur maximale respective et la valeur actuelle, et les valeurs de configuration correspondent aux niveaux résultant de la différence et de la granularité.

5. Procédé selon l'une des revendications précédentes, dans lequel, à l'étape c), la nouvelle configuration est déterminée de manière aléatoire.

**6.** Procédé selon l'une des revendications 2 à 5, dans lequel, à l'étape e), les stations de base compensatrices transmettent le résultat de la recherche à la station de base coordinatrice et la comparaison est effectuée au niveau de la station de base coordinatrice.

**7.** Procédé selon l'une des revendications 2 à 5, dans lequel, à l'étape e), les stations de base compensatrices effectuent la comparaison et transmettent le résultat respectif de la comparaison à la station de base coordinatrice.

**8.** Procédé selon l'une des revendications précédentes, dans lequel, à l'étape f), l'évaluation s'effectue selon l'équation suivante :

$$f(x) = \frac{\sum_{m} MS_{re_m}(x)}{MS_{out}} * w_0 + \sum_{m} \left( \frac{1}{\sum_{n} KP_{m,n}(x)} * w_n \right)$$

où :

$MS_{re}$ : le nombre de stations mobiles qui ont pu être reconnectées au réseau de radiocommunication mobile par la compensation de l'une des stations de base sélectionnée m,
x : la configuration de compensation au niveau du réseau de compensation,
$MS_{out}$ : la somme de l'ensemble des stations mobiles qui n'ont pas pu être reconnectées au réseau après une défaillance de station de base,
KP : les paramètres de compensation qui ont été modifiés au niveau d'une station de base w : la pondération pour la priorisation
n : le nombre de paramètres de compensation qui peuvent être modifiés au niveau d'une station de base.

**9.** Procédé selon l'une des revendications 5 à 8, dans lequel l'étape h) comprend :

la recherche d'un jeu supplémentaire de nouvelles configurations en fonction des meilleures évaluations des configurations générées de manière aléatoire du jeu de configurations précédent,
le nouveau jeu de configurations présentant le même nombre de configurations que le jeu de configurations précédent ;
la reconfiguration correspondante de chacune de la au moins une station de base;
la recherche des stations mobiles reliées aux stations de base du réseau de compensation et comparaison des stations mobiles reliées obtenues avec les stations mobiles initialement reliées aux stations de base du réseau de compensation après la défaillance de la station de base ;
l'évaluation de la configuration respective des stations de base du réseau de compensation.

**10.** Procédé selon l'une des revendications précédentes, dans lequel l'étape h) comprend :

H1 regroupement de l'ensemble des résultats d'évaluation et de la configuration de réseau de compensation correspondante en un premier groupe d'un nombre prédéterminé des meilleurs résultats d'évaluation et en un deuxième groupe des résultats d'évaluation restants ;
H2 sélection aléatoire de k configurations respectivement dans le premier groupe et la division respective de manière aléatoire des configurations sélectionnées afin d'obtenir ainsi 2k configurations partielles ;
H3 assemblage des 2k configurations partielles obtenues pour obtenir k nouvelles configurations ;
H4 modification des configurations nouvellement générées ;
H5 répétition des étapes H2 à H4 jusqu'à générer un nouveau jeu de configurations comportant autant de configurations que le jeu de configurations initial ;
H6 répétition des étapes c) à h) sur les configurations du nouveau jeu de configurations jusqu'à remplir un critère d'abandon.

**11.** Procédé selon la revendication 10, dans lequel le critère d'abandon est un nombre prédéfini de jeux de configurations à passer.

**12.** Procédé selon la revendication 11, dans lequel la configuration obtenue à l'abandon est conservée comme la meilleure configuration possible jusqu'à la remise en service de la station de base défaillante.

**13.** Procédé selon l'une des revendications 10, 11 ou 12, dans lequel k < N/2, N étant le nombre total des configurations contenues dans le premier groupe et k étant, de préférence, égal à 2.

**Fig. 1**

**Fig. 2**

**Fig. 3**

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008030171 A
- EP 09154403 A